# EUROPÄISCHE PATENTSCHRIFT

(11) **EP 1 713 681 B1**
(45) Veröffentlichungstag und Bekanntmachung des Hinweises auf die Patenterteilung: **27.08.2008**
(21) Anmeldenummer: 04804911.8
(22) Anmeldetag: 17.12.2004
(51) Int. Cl.: B62D 15/02, B62D 1/28, B62D 6/02

(54) **FAHRERASSISTENZSYSTEM ZUR UNTERSTÜTZUNG EINES FAHRZEUGFÜHRERS**
DRIVER ASSISTANCE SYSTEM FOR ASSISTING THE DRIVER OF A VEHICLE
SYSTEME D'ASSISTANCE AU CONDUCTEUR POUR ASSISTER LE CONDUCTEUR D'UN VEHICULE

(30) Priorität: 24.12.2003 DE 10361238
(43) Veröffentlichungstag der Anmeldung: 25.10.2006
(73) Patentinhaber: Continental Teves AG & Co. oHG, 60488 Frankfurt am Main (DE)
(72) Erfinder: BÖHM, Jürgen, 65558 Oberneisen (DE); ROHLEDER, Dirk, 57555 Mudersbach (DE)
(86) Internationale Anmeldenummer: PCT/EP2004/053568
(87) Internationale Veröffentlichungsnummer: WO 2005/063552

(56) Entgegenhaltungen:
- EP-A- 0 278 366
- EP-A- 1 348 610
- DE-A1- 3 830 747
- US-B1- 6 308 123

## Beschreibung

Die Erfindung betrifft ein Fahrerassistenzsystem zur Unterstützung eines Fahrzeugführers bei seiner Lenktätigkeit zur Führung eines Fahrzeugs in einer Fahrspur, mit einer Positions-Ermittlungseinheit die eine laterale Position des Fahrzeugs bezogen auf eine ideale laterale Position des Fahrzeugs und eine Winkelposition bezogen auf eine ideale Winkelposition des Fahrzeugs in der Fahrspur ermittelt, mit einem äußeren Regelkreis, zwecks Einregelung der lateralen Position des Fahrzeugs und mit einem unterlagerten inneren Regelkreis, zwecks Einregelung der Winkelposition des Fahrzeugs.

Die Begriffe "Fahrer" bzw. "Fahrerassistenasyster" sollen hier und im folgenden dieselbe Bedeutung haben wie die Begriffe "Fahrzeugführer" bzw. "Fahrzeugführerassistenzsystem".

Die Erfindung betrifft ebenso ein Verfahren zur Unterstützung eines Fahrzeugführers bei seiner Lenktätigkeit zur Führung eines Fahrzeugs in einer Fahrspur, bei dem eine laterale Position des Fahrzeugs bezogen auf eine ideale laterale Position des Fahrzeugs und eine Winkelposition bezogen auf eine ideale Winkelposition des Fahrzeugs in der Fahrspur ermittelt wird, bei dem mit einem äußeren Regelkreis die laterale Position des Fahrzeugs und mit einem unterlagerten inneren Regelkreis die Winkelposition des Fahrzeugs eingeregelt wird.

Die Erfindung betrifft auch ein Fahrzeug mit eines Fahrzeuglenkung.

Aus der EP-A 0 278 366 ist eine Steuervorrichtung für das Lenken der Räder eines Fahrzeugs offenbart, mit einem Lenksensor zum Detektieren eines Lenkwinkels eines Lenkrades, mit einem Sensor für das Verhalten des Fahrzeugs zum Detektieren von Variablen, welche das Verhalten des Fahrzeugs wiedergeben, mit Steuermitteln welche eine Mittkopplungssignal-Operationseinrichtung umfassen, die mit einer Lenkwinkel-Signalabgabeschaltung ausgestattet ist, um ohne Veränderungen ein Lenkwinkelsignal zu übertragen, welches von dem Lenk-Sensor ausgegeben wird.

US-6 308 123 B1 offenbart den gegenstand des obenbegriffs der Ansprüch 1 und 11.

Aufgabe der Erfindung ist es, ein Fahrerassistenzsystem und ein Verfahren zur Unterstützung eines Fahrzeugführers bei seiner Lenktätigkeit zu schaffen, das sicherstellt, dass Störungen in der Spurführung ausgeregelt werden, unerwünschte Lenkbewegungen vermieden werden und der Fahrzeugführer so auf komfortable und sichere Welse beim Halten einer Fahrspur unterstützt wird.

Die Aufgabe wird durch die Merkmale der unabhängigen Patentansprüche gelöst.

Bevorzugte Ausgestaltungen sind in den Unteransprüchen angegeben.

Die Aufgabe wird dadurch gelöst, dass bei einem Fahrerassistenzsystem zur Unterstützung eines Fahrzeugführers bei seiner Lenktätigkeit zur Führung eines Fahrzeugs in einer Fahrspur vorgesehen ist, dass eine Abweichungsgeschwindigkeits-Ermittlungseinheit vorgesehen ist, welche die Geschwindigkeit einer Abweichung (Abweichungsgeschwindigkeit) der lateralen Position des Fahrzeugs von einer idealen lateralen Position des Fahrzeugs ermittelt und dass ein zusätzlicher integralwirkender Regelkreis vorgesehen ist, mittels dem die Geschwindigkeit einer Abweichung der lateralen Position des Fahrzeugs von einer idealen lateralen Position des Fahrzeugs mit berücksichtigt wird.

Nach der Erfindung ist es vorgesehen, dass zur Einregelung der lateralen Position in die ideale laterale Postition des Fahrzeugs und zur Einregelung der Winkelposition in die ideale Winkelposition des Fahrzeugs ein Soll-Len<winkel ermittelt wird und durch einen zugeordneten Lenkwinkelregler eingeregelt wird.

In einer Ausführungsform ist es vorgesehen, dass ein Sollwert für die Geschwindigkeit einer Abweichung (Abweichungsgeschwindigkeit) der lateralen Position des Fahrzeugs von einer idealen lateralen Position des Fahrzeugs in Abhängigkeit von einer Abweichung der lateralen Position des Fahrzeugs von der idealen lateralen Position des Fahrzeugs (Lateralfehler) vorgegeben wird.

Nach der Erfindung ist es vorgesehen, dass der Sollwert für die Geschwindigkeit einer Abweichung (Abweichungsgeschwindigkeit) der lateralen Position des Fahrzeugs von einer idealen lateralen Position des Fahrzeugs nach Maßgabe einer Abweichung der lateralen Position des Fahrzeugs von der idealen lateralen Position des Fahrzeugs (Lateralfehler) vorgegeben wird.

Erfindungsgemäß ist es vorgesehen, dass der innere Regelkreis eine PD-Struktur aufweist.

In einer Ausführungsform ist es vorgesehen, dass zusätzlich eine Kurvenvorsteuerung vorgesehen ist. Der Begriff "Kurvenvorsteuerung" bedeutet hier ein Einsteuern eines zusätzlichen Lenkwinkels, insbesondere abhängig von der Fahrzeuggeschwindigkeit, dem Fahrzeugeigenlenkgradienten und der Bahnkrümmung im Vorausschaubereich der Positionsermittlungseinheit.

Nach der Erfindung ist es vorgesehen, dass ein äußerer Regelkreis ohne integrale Komponente vorgesehen ist und dass eine zumindest teilweise Verringerung der Abweichung der lateralen Position des Fahrzeugs von der idealen lateralen Position des Fahrzeugs (Lateralfehler) durch Einregelung der Winkelposition des Fahrzeugs mittels des inneren Regelkreises bei der Ermittlung des Soll-Lenkwinkels mit berücksichtigt wird, zwecks Vermeidung eines weiteren und ggf. zu starken Anwachsens des Soll-Lenkwinkels.

Erfindungsgemäß ist es vorgesehen, dass ein äußerer Regelkreis ohne integrale Komponente vorgesehen ist und dass durch raschen Abbau eines bestehenden integralen Bestandteiles ein relativ schneller Richtungswechsel ermöglicht wird.

In einer Ausführungsform ist es vorgesehen, dass der äußerer Regelkreis eine P²D-Struktur aufweist und dass bei einer Abweichung der lateralen Position des Fahrzeugs von der idealen lateralen Position des Fahrzeugs (Lateralfehler) durch zumindest zwei Verstärkungen eine hinreichend starker Regelungseingriff erfolgt.

Die Aufgabe wird auch durch ein Verfahren zur Unterstützung eines Fahrzeugführers bei seiner Lenktätigkeit zur Führung eines Fahrzeugs in einer Fahrspur gelöst, das dadurch gekennzeichnet ist, dass eine Geschwindigkeit einer Abweichung (Abweichungsgeschwindigkeit) der lateralen Position des Fahrzeugs von einer idealen lateralen Position des Fahrzeugs ermittelt wird und dass die Geschwindigkeit einer Abweichung der lateralen Position des Fahrzeugs von einer idealen lateralen Position des Fahrzeugs mit berücksichtigt wird mittels eines zusätzlichen integralwirkenden Regelkreises.

Erfindungsgemäß ist es bei dem Verfahren vorgesehen, dass zur Einregelung der lateralen Position in die ideale laterale Position des Fahrzeugs und zur Einregelung der Winkelposition in die ideale Winkelposition des Fahrzeugs ein Soll-Lenkwinkel ermittelt wird und eingeregelt wird.

Nach der Erfindung ist es bei dem Verfahren vorgesehen, dass ein Sollwert für die Geschwindigkeit einer Abweichung (Abweichungsgeschwindigkeit) der lateralen Position des Fahrzeugs von einer idealen lateralen Position des Fahrzeugs in Abhängigkeit von einer Abweichung der lateralen Position des Fahrzeugs von der idealen lateralen Position des Fahrzeugs (Lateralfehler) vorgegeben wird.

Es ist bei dem Verfahren erfindungsgemäß vorgesehen, dass ein weiteres und ggf. zu starken Anwachsens des Soll-Lenkwinkels vermieden wird und dass ein relativ schneller Richtungswechsel durch raschen Abbau eines bestehenden integralen Bestandteiles ermöglicht wird durch einen äußeren Regelkreis ohne eine integrale Komponente, in dem eine zumindest teilweise Verringerung der Abweichung der lateralen Position des Fahrzeugs von der idealen lateralen Position des Fahrzeugs (Lateralfehler) durch Einregelung der Winkelposition des Fahrzeugs bei der Ermittlung des Soll-Lenkwinkels mit berücksichtigt wird.

Erfindungsgemäß ist es bei dem Verfahren vorgesehen, dass ein ständiges und ggf. zu starkes Anwachsens eines einzustellenden Soll-Lenkwinkels bei einer Abweichung der lateralen Position des Fahrzeugs von der idealen lateralen Position des Fahrzeugs (Lateralfehler) vermieden wird, in dem eine Regelung mit einem äußeren Regelkreis mit einer P²D-Struktur mit zumindest zwei Verstärkungen vorgesehen ist.

Die Aufgabe wird ebenso durch ein Fahrzeug mit einer Fahrzeuglenkung gelöst, welches ein Fahrerassistenzsystem nach der Erfindung aufweist.

Die Erfindung wird anhand von 4 Abbildungen (Fig. 1 bis Fig. 4) im folgenden beispielhaft näher erläutert.

Die Fig. 1 zeigt eine Fahrsituation eines Fahrzeugs während einer Spurführungsvorgangs mit für die Spurführung wesentlichen Größen.

In der Fig. 2 ist eine gesamte Reglerstruktur für das Spurführungssystem schematisch dargestellt.

Die Fig. 3 zeigt eine Reglerstruktur eines zusätzlichen integralwirkenden Reglers (I-Reglers).

In der Fig. 4 ist eine Reglerstruktur eines P²D-Reglers für eine laterale Abweichung näher dargestellt.

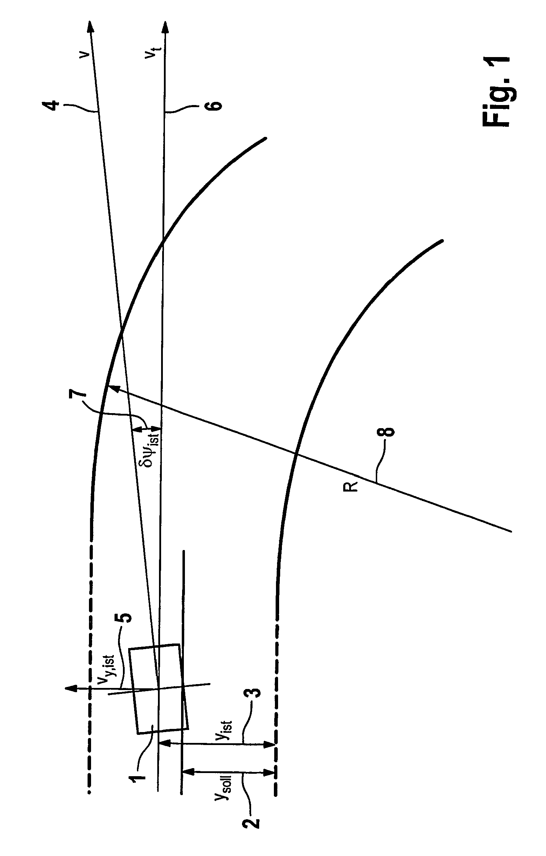

Ein Fahrzeug ist mit einem Fahrzeugführerassistenzsystem, hier auch als Fahrerassistenzsystem bezeichnet, zur "automatischen" Spurführung (Fahrerassistenzsystem) nach der Erfindung ausgerüstet. Das Fahrzeug 1 ist in der Fig. 1 gezeigt in einer Fahrsituation während eines Spurführungsvorganges, wobei die folgenden für die Regelung verwendeten Signale bzw. deren Bezeichnungen darin dargestellt sind:
- yₛₒₗₗ: Sollwert der lateralen Fahrzeugposition 2
- yᵢₛₜ: Aktueller Wert der lateralen Fahrzeugposition 3
- v: Aktuelle Fahrzeug-Longitudinalgeschwindigkeit 4
- v_{y,ist}: Aktuelle Fahrzeug-Lateralgeschwindigkeit 5
- vₜ: Bahntangente 6
- δδᵢₛₜ: Aktueller Winkel zwischen Bahntangente und Fahrzeugbewegungsrichtung (relativer Gierwinkel) 7
- C: Bahnkrümmung, wobei C = 1 / R, mit R = Bahnradius 8

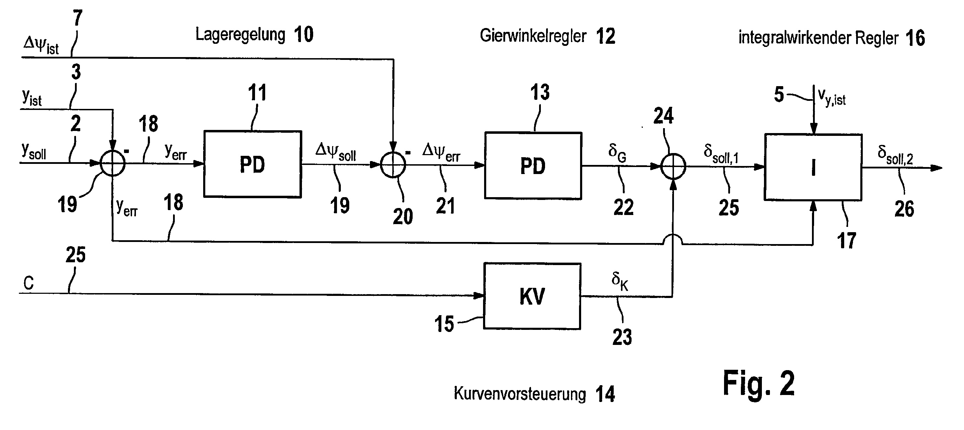

Die eingesetzte Regelkreisstruktur für das Spurführungssystem zeigt Fig. 2. Diese besteht hier aus einem äußeren Regelkreis für die laterale Fahrzeugposition. (Lageregelung 10). Dieser Regelkreis, vorteilhaft nach der Erfindung mit einer PD- oder P²D-Struktur, ist hier als PD-Regler 11 ausgeführt. Ein unterlagerter innerer Kreis (Gierwinkelregelung 12), hier als PD-Regler 13 ausgeführt, übernimmt das Einregeln des relativen Gierwinkels. Zusätzlich enthält diese Struktur einen Bestandteil zur Kurvenvorsteuerung KV 14 mit Regler 15. Dieses Konzept wird nach der Erfindung ergänzt durch einen integralwirkenden Regelkreis 16, einen I-Regler 17.

In dieser Struktur werden Fehler in der lateralen Position des Fahrzeugs über den sich daraus ergebenden Sollgierwinkel ausgeregelt. Durch den integralwirkenden Regelkreis 16, mit 1-Regler 17, ist bei der Lageregelung 10 ein integralwirkenden Anteil nicht notwendig: erfindungsgemäß weist der Regler 11 keine I-Komponente auf. Probleme, die durch eine integrale Komponente des PID-Lagereglers verursacht werden, können so sicher vermieden werden, aber durch den integralwirkenden Regelkreis 16 können trotzdem Störungen durch seitlich an das Fahrzeug angreifende Kräfte, wie Fahrbahnquerneigung oder Seitenwind, ausgeregelt werden. Dabei tritt vorteilhaft auch bei einer Fahrsituation ohne störende Seitenkräfte im wesentlichen keine Instabilität der Regelung auf.

Störungen der vorgenanten Art (z. B. Fahrbahnquerneigung oder Seitenwind) sind problematisch, da zu ihrem Ausgleich auf integral wirkende Reglerkomponenten zurückgegriffen werden muss, wenn diese Störungen nicht direkt durch Sensoren erfasst werden können. Da Fahrzeuge ein zweifach integrales Verhalten von lateraler Abweichung über den Lenkwinkel zeigen, würde der Einsatz einer I-Reglerkomponente in der Lageregelung 10 generell zu Schwingungen in der lateralen Fahrzeugposition führen. Durch den zusätzlichen integralwirkenden Regler 16 können - im Gegensatz zu einer Lageregelung 10 mit I-Regelkomponente, Schwingungen in der lateralen Fahrzeugposition vermieden werden. Durch den zusätzlichen integralwirkenden Regler 16 können -im Gegensatz zu einer Lageregelung 10 mit I-Regelkomponente, auch sich sehr schnell in Betrag und Richtung ändernde Störgrößen sicher ausgeregelt werden. Darüber hinaus kann im Sinne der Erfindung auf Aussteuerbegrenzungen bei der Regelung verzichtet werden. Diese sind problematisch, da sich der Stellgrößenbereich nicht oder nur unsicher definieren lässt, um eine derartige Aussteuerbegrenzungen sinnvoll anzusetzen.

In dem hier beschriebenen System nach Fig. 2 wird der Lageregelung die Abweichung der lateralen Position des Fahrzeugs yₑᵣᵣ 18 als Eingangsgröße zugeführt. Die Abweichung (Fehlerwert) der lateralen Position des Fahrzeugs yₑᵣᵣ wird ermittelt durch eine Differenzbildner 19 der idealen lateralen Position des Fahrzeugs, d.h. dem Sollwert der lateralen Fahrzeugposition yₛₒₗₗ 2 und einer lateralen Position des Fahrzeugs des Fahrzeugs, d.h. dem aktuellen Wert der lateralen Fahrzeugposition yᵢₛₜ 3, in der Fahrspur. Der Lageregler 11 ermittelt eine ideale Winkelposition des Fahrzeugs in der Fahrspur, d. h. einen Sollwert für den Winkel zwischen Bahntangente und Fahrzeugbewegungsrichtung, den relativen Gierwinkel δδₛₒₗₗ 7 als Ausgangsgröße 19.

Die Abweichung (Fehlerwert) δδₑᵣᵣ 21 der Winkelposition des Fahrzeugs, d. h. dem aktuellen Winkel zwischen Bahntangente und Fahrzeugbewegungsrichtung (relativer Gierwinkel) δδᵢₛₜ 7, und dem relativen Gierwinkel δδₛₒₗₗ 7 wird durch eine Differenzbildung 20 ermittelt und dem Gierwinkelregler 13 als Einganggröße zugeführt. Der Gierwinkelregler 13 ermittelt daraus einen Gierwinkelfehler Korrekturlenkwinkels δ_{G} 22.

Der Korrekturlenkwinkels δ_{G} 22 wird mit einem Fahrspurverlauf-Lenkwinkel δ_{K} 23 zusammengeführt bzw. überlagert 23, welcher Fahrspurverlauf-Lenkwinkel δ_{K} 23 als Ausgangsgröße aus der Kurvenvorsteuerung 14 nach Maßgabe der Bahnkrümmung C 25 bzw. des Bahnradius 8, mit C = 1 / R, als Ausgangsgröße zugeführt wird. Aus der Zusammenführung bzw. der Überlagerung 23 wird ein erster Sollwert für den Lenkwinkels δ_{soll,1} 25 gebildet, der als Einganggröße dem integralwirkenden Regler 17 zugeführt wird. Aus der dem ersten Sollwert für den Lenkwinkels δ_{soll,1} 25 und der aktuellen Fahrzeug-Lateralgeschwindigkeit v_{y,ist} 5 als weitere Eingangsgröße wird ein zweiter Sollwert für den Lenkwinkels δ_{soll,2} 26 als korrigierte Gesamt-Ausgangsgröße des Fahrerassistenzsystem ermittelt und einem Lenkungsregler zugeführt, zwecks Einstellung eines fahrerunterstützenden Lenkwinkels oder eines auf Grundlage des Lenkwinkels δ_{soll,2} 26 ermittelten, fahrerunterstützenden überlagerten Lenkmoments.

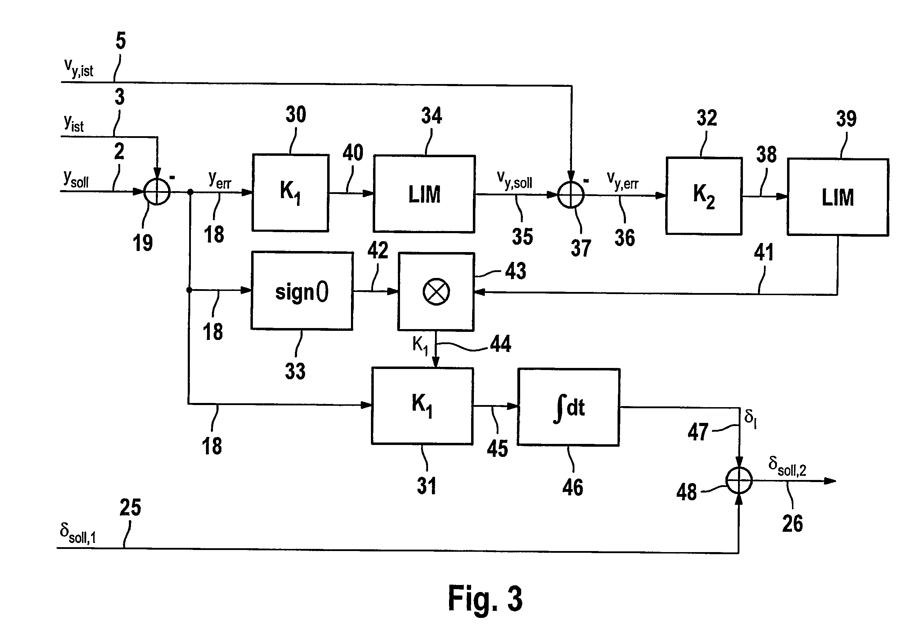

In der Fig. 3 ist die Reglerstruktur des zusätzlichen integralwirkenden Reglers (I-Reglers) 17 näher dargestellt.

Diese weist eine Kombination von zwei Verstärkerstufen K1 30,31 und K2 32 auf. Den ersten Verstärkungen K1 30,31 wird jeweils die Abweichung (Fehlerwert) der lateralen Position des Fahrzeugs yₑᵣᵣ als Eingangsgröße ebenso wie einer Vorzeichenfunktionseinheit 33 zugeführt. Aus der einen ersten Verstärkung K1 30 wird daraus 43 über einen anschließenden ersten Begrenzer 34 eine Soll-Fahrzeuglateralgeschwindigkeit v_{*y*,*sol*l} 35 ermittelt. Die Abweichung, der Lateralgeschwindigkeits-Fehler v_{*y*,*er*r} 36, der aktuellen Fahrzeug-Lateralgeschwindigkeit v_{y,ist} 5 von der Soll-Fahrzeuglateralgeschwindigkeit v_{*y*,soll} 35 wird anschließend in einem Differenzbildner 37 ermittelt und der zweiten Verstärkung 32 zugeführt. Nach der Verstärkung 32 wird die Ausgangsgröße einem Begrenzer 39 zugeführt. Der so ggf. begrenzte Wert des Lateralgeschwindigkeits-Fehler 41 wird mit einer Ausgangsgröße 42 aus der Vorzeichenfunktionseinheit 33 überlagert in einem Multiplikator 43.

Daraus wird erster, korrigierter Verstärkungsfaktor K1 44 gebildet, welcher der weiteren ersten Verstärkung K1 31 zugeführt wird. In der Verstärkung 31 wird ein korrigierter Wert der Abweichung (Fehlerwert) der lateralen Position des Fahrzeugs yₑᵣᵣ ermittelt und als Eingangswert 45 einer Integriereinheit 46 zugeführt, die daraus einen integrierten Korrektur-Lenkwinkel δ₁ bildet. Schließlich wird der Lenkwinkels δ_{soll,1} 25 mit dem so gebildeten integrierten Korrektur-Lenkwinkel δ_{I} überlagert 48, d.h. summiert, und als korrigierte Gesamt-Ausgangsgröße d_{soll,2} des Fahrerassistenzsystem ermittelt und einem Lenkungsregler zugeführt.

Durch diese Reglerstruktur ist die Zuwachsrate des integrierenden Reglers 17 proportional vom Fehlerwert der Lateralgeschwindigkeit v_{y,err} abhängig. Der Sollwert dieser Lateralgeschwindigkeit v_{y,soll} hängt proportional vom Fehlerwert der lateralen Fahrzeugposition yₑᵣᵣ ab. Der Hauptvorteil dieser Struktur ist darin begründet, dass Fehler in der Lateralposition des Fahrzeuges, die bereits mit andere Reglerkomponenten durch Einstellen eines relativen Gierwinkels in geeigneter Weise (v_{y,err} = 0) kompensiert werden, nicht zum Zuwachs des Integrators und damit zu einem weiteren und ggf. zu starken Anwachsen des Lenkwinkels δₛₒₗₗ führen. Weiterhin kann durch die Möglichkeit des Richtungswechsels des integralen Zuwachses mittels der Vorzeichenfunktionseinheit 33 ein bestehender I-Anteil in falscher Richtung wenn notwendig, z. B. bei Wechsel der Querneigungsrichtung oder böigem Seitenwind, sehr schnell abgebaut werden.

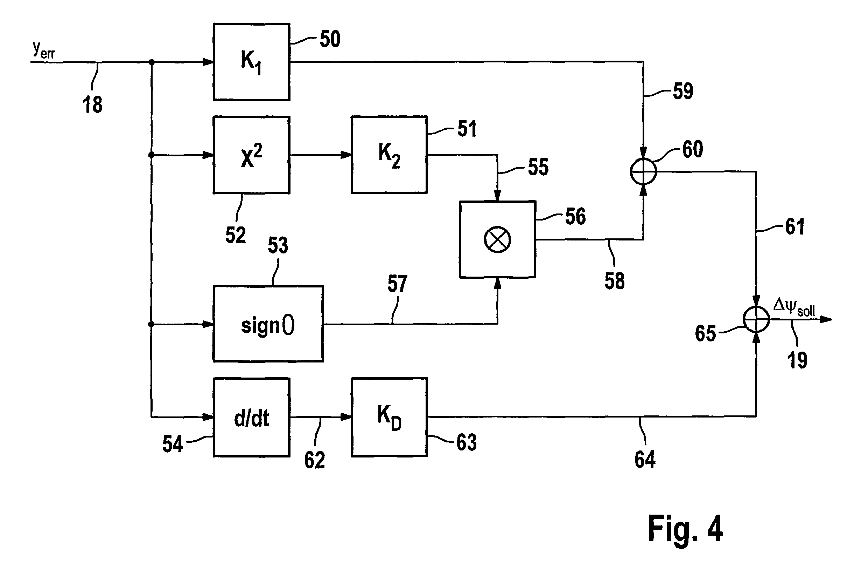

In der Fig. 4 ist eine Reglerstruktur eines P²D-Reglers für eine laterale Abweichung näher dargestellt.

Diese weist ebenso eine Kombination von zwei Verstärkerstufen K1 50 und K2 51 auf. Der ersten Verstärkungen K1 50 wird die Abweichung (Fehlerwert) der lateralen Position des Fahrzeugs yₑᵣᵣ als Eingangsgröße ebenso wie einer Quadratbildungseinheit 52, einer Vorzeichenfunktionseinheit 53 und einer Differentiationseinheit 54 zugeführt.

Aus der ersten Quadratbildungseinheit 52 wird daraus 43 über die daran anschließende zweite Verstärkung 51 eine Größe, d. h. ein dem Fehlerquadrat proportionaler Wert 55 erzeugt, die in einem Multiplikator 56 überlagert wird mit einer Ausgangsgröße, d. h. mit einem vorzeichenkorrigierten Wert der Abweichung (Fehlerwert) der lateralen Position des Fahrzeugs yₑᵣᵣ, aus der Vorzeichenfunktionseinheit 53.

Die Ausgangsgröße aus der ersten Verstärkung 50, d. h. die verstärkte Abweichung (Fehlerwert) 59 der lateralen Position des Fahrzeugs yₑᵣᵣ, wird mit einem aus dem Multiplikator 56 überlagerten Wert 58 zusammengeführt in einem Addierer 60 und als Ausgangsgröße ein vorzeichenkorrigierter, verstärkter Wert 61 der Abweichung (Fehlerwert) der lateralen Position des Fahrzeugs yₑᵣᵣ, erzeugt.

Der zeitlich differenzierte Wert 62 der Abweichung (Fehlerwert) der lateralen Position des Fahrzeugs yₑᵣᵣ aus der Differentiationseinheit 54 wird einer Einheit 63 zugeführt, die dazu dient, schnell auftretende Veränderungen in der lateralen Position entgegenzuwirken und diese zu dämpfen.

Der Ausgangwert aus der Einheit 63, d. h. der Dämpfungsanteil 64, wird ebenso wie der vorzeichenkorrigierte, verstärkte Wert 61 der Abweichung (Fehlerwert) der lateralen Position des Fahrzeugs yₑᵣᵣ, einem Summierer 65 zugeführt, der daraus den resultierenden Ausgangswert 26 der Lageregelung 10 bildet.

Durch diese quadratische Struktur der verwendeten P-Komponente der Lageregelung (vgl. Fig. 2) wird erreicht, dass die notwendigerweise hohe Verstärkung auf Fehler in der Lateralposition des Fahrzeugs yₑᵣᵣ, in einem durch die Kombination der in Fig. 4 genannten Verstärkungen K1 und K2 zu definierenden Bereich um 0 (NULL) klein bleibt. Daraus resultiert, dass kleine Abweichungen von der Fahrzeugsollposition nicht zu ständig großen Lenkbewegungen führen.

Durch die Erfindung wird so ein zusätzlich benötigter Lenkwinkel berechnet, mittels dem Störungen in der Spurführung, die z. B. durch Fahrbahnquerneigung oder Seitenwind entstehen, ausgeregelt werden sowie die Lenkbewegungen hinsichtlich Lenkradruhe (Komfort) optimiert werden, aber gleichzeitig führt diese Regelung nicht zu unerwünschten Lenkbewegungen oder einem für den Fahrer unkomfortablen Lenkbewegungen.

Das Fahrerassistenzsystem bzw. das Verfahren nach der Erfindung kann in Teilen realisiert oder mit bekannten Fahrerassistenzsystemen zur Unterstützung eines Fahrzeugführers bei seiner Lenktätigkeit zur Führung eines Fahrzeugs in einer Fahrspur kombiniert werden.

## Patentansprüche

1. Fahrerassistenzsystem zur Unterstützung eine:; Fahrzeugführers bei seiner Lenktätigkeit zur Führung eines Fahrzeugs in einer Fahrspur, mit einen Positions-Ermittlungseinheit, die eine laterale Position des Fahrzeugs bezogen auf eine ideale laterale Position des Fahrzeugs und eine Winkelposition bezogen auf eine ideale Winkelposition des Fahrzeugs in der Fahrspur ermittelt, mit, einem äußeren Regelkreis (10, 11), zwecks Einregelung der lateralen Position des Fahrzeugs und mit einem unterlagerten inneren Regelkreis (13), zwecks Einregelung der Winkelposition des Fahrzeugs,
**dadurch gekennzeichnet, dass** eine Abweichungsgeschwindigkeits-Ermittlungseinheit (37) vorgesehen ist, welche die Geschwindigkeit (36) einer Abweichung der lateralen Position (18) des Fahrzeugs von einer idealen lateralen Position (2) des Fahrzeugs ermittelt und dass ein zusätzlicher integralwirkender Regelkreis (16, 17) vorgesehen ist, mittels dem die Geschwindigkeit (36) einer Abweichung der lateralen Position (18) des Fahrzeugs von einer idealen lateralen Position (2) des Fahrzeugs mit berücksichtigt wird.

2. Fahrerassistenzsystem nach Anspruch 1,
**dadurch gekennzeichnet, dass** zur Einregelunz der lateralen Position (3)in die ideale laterale Position (2) des Fahrzeugs und zur Einregelung der Winkelposition (7) in die ideale Winkelposition (19) des Fahrzeugs ein Soll-Lenkwinkel (25, 26) ermittelt wird und durch einen zugeordneten Lenkwinkeliegler eingeregelt wird.

3. Fahrerassistenzsystem nach Anspruch 1 oder 2,
**dadurch gekennzeichnet, dass** ein Sollwert (35) für die Geschwindigkeit einer Abweichung der lateralen Position (18) des Fahrzeugs von einer idealen lateralen Position (2) des Fahrzeugs vorgegeben wird.

4. Fahrerassistenzsystem nach Anspruch 3,
**dadurch gekennzeichnet, dass** der Sollwert (35) für die Geschwindigkeit einer Abweichung der lateralen Position (18) des Fahrzeugs von einer idealen lateralen Position (2) des Fahrzeugs nach Maßgabe einer Abweichung der lateralen Position (18) des Fahrzeugs von der idealen lateralen Position (2) des Fahrzeugs vorgegeben wird.

5. Fahrerassistenzsystem nach einem der Ansprüche 1 bis 4,
**dadurch gekennzeichnet, dass** der unterlagerte innere Regelkreis (13) eine PD-Struktur aufweist.

6. Fahrerassistenzsystem nach einem der Ansprüche 1 bis 5,
**dadurch gekennzeichnet, dass** zusätzlich eine Kurvenvorsteuerung (14, 15) vorgesehen ist.

7. Fahrerassistenzsystem nach einem der Ansprüche 2 bis 6,
**dadurch gekennzeichnet, dass** ein äußerer Regelkreis (10, 11) ohne integrale Komponente vorgesehen ist und dass eine zumindest teilweise Verringerung der Abweichung der lateralen Position (18) des Fahrzeugs von der idealen lateralen Position (2) des Fahrzeugs durch Einregelung der Winkelposition des Fahrzeugs mittels des inneren Regelkreises (14, 15) bei der Ermittlung des Soll-Lenkwinkels (25, 26) mit berücksichtigt wird, zwecks Vermeidung eines weiteren und ggf. zu starken Anwachsens des Soll-Lenkwinkels (25, 26).

8. Fahrerassistenzsystem nach einem der Ansprüche 2 bis 7,
**dadurch gekennzeichnet, dass** ein äußerer Regelkreis (10, 11) ohne integrale Komponente vorgesehen ist und dass durch raschen Abbau eines bestehenden integralen Bestandteiles ein relativ schneller Richtungswechsel ermöglicht wird.

9. Fahrerassistenzsystem nach einem der Ansprüche 1 bis 6,
**dadurch gekennzeichnet, dass** der äußere Regelkreis eine PD-Struktur oder P²D-Struktur aufweist.

10. Fahrerassistenzsystem nach Anspruch 9,
**dadurch gekennzeichnet, dass** der äußerer Regelkreis eine P²D-Struktur aufweist und dass bei einer Abweichung der lateralen Position (18) des Fahrzeugs von der idealen lateralen Position (2) des Fahrzeugs durch zumindest zwei Verstärkungen (30, 31, 32; 50, 51) eine hinreichend starker Regelungseingriff erfolgt.

11. Verfahren zur Unterstützung eines Fahrzeugführers bei seiner Lenktätigkeit zur Führung eines Fahrzeugs in einer Fahrspur, bei dem eine laterale Position des Fahrzeugs bezogen auf eine ideale laterale Position des Fahrzeugs und eine Winkelposition bezogen auf eine ideale Winkelposition des Fahrzeugs in der Fahrspur ermittelt wird, bei dem mit einem äußeren Regelkreis (10, 11) die laterale Position des Fahrzeuge und mit einem unterlagerten inneren Regelkreis (13) die Winkelposition des Fahrzeugs eingeregelt wird,
**dadurch gekennzeichnet, dass** eine Geschwindugkeit einer Abweichung der lateralen Position (18) des Fahrzeugs von einer idealen lateralen Position (2) des Fahrzeugs ermittelt wird und dass die Geschwindigkeit einer Abweichung der lateralen Position (18) des Fahrzeugs von einer idealen lateralen Position (2) des Fahrzeugs mit berücksichtigt wird mittels eines zusätzlichen integralwirkenden Regelkreises (16, 17).

12. Verfahren nach Anspruch 11,
**dadurch gekennzeichnet, dass** zur Einregelung der lateralen Position (3) in die ideale laterale Position (2)des Fahrzeugs und zur Einregelung der Winkelposition (7) in die ideale Winkelposition (19) des Fahrzeugs ein Soll-Lenkwinkel (25, 26) ermittelt wird und eingeregelt wird.

13. Verfahren nach Anspruch 11 oder 12,
**dadurch gekennzeichnet, dass** ein Sollwert (35) für die Geschwindigkeit einer Abweichung der lateralen Position (18) des Fahrzeugs von einer idealen lateralen Position (2) des Fahrzeugs in Abhängigkeit von einer Abweichung der lateralen Position (18) des Fahrzeugs von der idealen lateralen Position (2) des Fahrzeugs vorgegeben wird.

14. Verfahren nach einem der Ansprüche 11 bis 13,
**dadurch gekennzeichnet, dass** ein weiteres und ggf. zu starken Anwachsens des Soll-Lenkwinkels (25, 26) vermieden wird und dass ein relativ schneller Richtungswechsel durch raschen Abbau eines bestehenden integralen Bestandteiles ermöglicht wird durch einen äußeren Regelkreis (10, 11) ohne eine integrale Komponente, in dem eine zumindest teilweise Verringerung der Abweichung der lateralen Position (18) des Fahrzeugs von der idealen lateralen Position (2) des Fahrzeugs durch Einregelung der Winkelposition des Fahrzeugs bei der Ermittlung des Soll-Lenkwinkels (25, 26) mit berücksichtigt wird.

15. Verfahren nach einem der Ansprüche 11 bis 14,
**dadurch gekennzeichnet, dass** ein ständiges und ggf. zu starkes Anwachsens eines einzustellenden Soll-Lenkwinkels (25, 26) bei einer Abweichung der lateralen Position (18) des Fahrzeugs von der idealen lateralen Position (2) des Fahrzeugs vermieden wird, in dem eine Regelung mit einem äußeren Regelkreis (10, 11) mit einer P²D-Struktur mit zumindest zwe. Verstärkungen (30, 31, 32; 50, 51) vorgesehen ist.

16. Fahrzeug mit einer Fahrzeuglenkung,
**gekennzeichnet durch** ein Fahrerassistenzsystem nach einem der Ansprüche 1 bis 10.

## Claims

1. Driver assistance system for assisting a vehicle operator in his/her steering activity for guiding a vehicle in a lane, with a position determination unit, which determines a lateral position of the vehicle with respect to an ideal lateral position of the vehicle and an angular position with respect to an ideal angular position of the vehicle in the lane, with an external control circuit (10, 11) used to adjust the lateral position of the vehicle, and with an underlying internal control circuit (13) for adjusting the angular position of the vehicle,
**characterized in that** a deviation rate determination unit (37) is provided, which determines the rate (36) of a deviation of the lateral position (18) of the vehicle from an ideal lateral position (2) of the vehicle, and **in that** an additional integrally acting control circuit (16, 17) is provided, by means of which the rate (36) of a deviation of the lateral position (18) of the vehicle from an ideal lateral position (2) of the vehicle is taken into account.

2. Driver assistance system according to claim 1,
**characterized in that** for adjusting the lateral position (3) to the ideal lateral position (2) of the vehicle and for adjusting the angular position (7) to the ideal angular position (19) of the vehicle, a target steering angle (25, 26) is determined and adjusted using an associated steering angle regulator.

3. Driver assistance system according to Claim 1 or 2,
**characterized in that** a target value (35) is predetermined for the rate of a deviation of the lateral position (18) of the vehicle from an ideal lateral position (2) of the vehicle.

4. Driver assistance system according to Claim 3,
**characterized in that** the target value (35) for the rate of a deviation of the lateral position (18) of the vehicle from an ideal lateral position (2) of the vehicle is predetermined on the basis of a deviation of the lateral position (18) of the vehicle from the ideal lateral position (2) of the vehicle.

5. Driver assistance system according to any one of Claims 1 to 4,
**characterized in that** the underlying internal control circuit (13) presents a PD structure.

6. Driver assistance system according to any one of Claims 1 to 5,
**characterized in that**, in addition, a curve piloting control (14, 15) is provided.

7. Driver assistance system according to any one of Claims 2 to 6,
**characterized in that** an external control circuit (10, 11) without integral component is provided and that at least a partial reduction of the deviation of the lateral position (18) of the vehicle from the ideal lateral position (2) of the vehicle is taken into account by adjusting the angular position of the vehicle by means of the internal control circuit (14, 15) at the time of the determination of the target steering angle (25, 26), to the end of avoiding an additional and possibly excessively strong increase in the target steering angle (25, 26).

8. Driver assistance system according to any one of Claims 2 to 7,
**characterized in that** an external control circuit (10, 11) without integral component is provided, and that a relatively rapid change in direction is made possible by the rapid degradation of an existing integral component.

9. Driver assistance system according to any one of Claims 1 to 6,
**characterized in that** the external control circuit presents a PD structure or a P²D structure.

10. Driver assistance system according to Claim 9,
**characterized in that** the external control circuit presents a P²D structure, and that in the case of a deviation of the lateral position (18) of the vehicle from the ideal lateral position (2) of the vehicle a sufficiently strong adjustment intervention occurs as a result of at least two amplifications (30, 31, 32; 50, 51) .

11. Method for assisting a vehicle operator in his/her steering activity for guiding a vehicle in a lane, where a lateral position of the vehicle with respect to an ideal lateral position of the vehicle and an angular position with respect to an ideal angular position of the vehicle in the lane is determined, where the lateral position of the vehicle is adjusted with an external control circuit (10, 11), and the angular position of the vehicle is adjusted with an underlying internal control circuit (13),
**characterized in that** a rate of a deviation of the lateral position (18) of the vehicle from an ideal lateral position (2) of the vehicle is determined, and **in that** the rate of a deviation of the lateral position (18) of the vehicle from an ideal lateral position (2) of the vehicle is taken into account by means of an additional integrally acting control circuit (16, 17).

12. Method according to Claim 11,
**characterized in that** for adjusting the lateral position (3) to the ideal lateral position (2) of the vehicle and for adjusting the angular position (7) to the ideal angular position (19) of the vehicle, a target steering angle (25, 26) is determined and adjusted.

13. Method according to Claim 11 or 12,
**characterized in that** a target value (35) is predetermined for the rate of a deviation of the lateral position (18) of the vehicle from an ideal lateral position (2) of the vehicle depending on a deviation of the lateral position (18) of the vehicle from the ideal lateral position (2) of the vehicle.

14. Method according to any one of Claims 11 to 13,
**characterized in that** an additional and possibly excessively strong increase in the target steering angle (25, 26) is prevented, and that a relatively rapid change in direction is rendered possible by a rapid degradation of an existing integral component using an external control circuit (10, 11) without integral component, in which at least a partial reduction of the deviation of the lateral position (18) of the vehicle from the ideal lateral position (2) of the vehicle by adjusting the angular position of the vehicle is taken into account at the time of the determination of the target steering angle (25, 26).

15. Method according to any one of Claims 11 to 14,
**characterized in that** a continuous and possibly excessively strong increase of a target steering angle (25, 26) to be set, in the case of a deviation of the lateral position (18) of the vehicle from the ideal lateral position (2) of the vehicle, is prevented by providing a regulation with an external control circuit (10, 11) with a P²D structure with at least two amplifications (30, 31, 32; 50, 51).

16. Vehicle with vehicle steering system,
**characterized by** a driver assistance system according to any one of Claims 1 to 10.

## Revendications

1. Système d'assistance au conducteur pour aider un conducteur de véhicule dans son activité de direction pour diriger un véhicule sur une voie de circulation, comportant une unité de détermination de position qui détermine une position latérale du véhicule par rapport à une position latérale idéale du véhicule, et une position angulaire par rapport à une position angulaire idéale du véhicule dans la voie de circulation, comportant un circuit de régulation externe (10, 11) pour réguler la position latérale du véhicule et comportant un circuit de régulation interne (13) subordonné pour réguler la position angulaire du véhicule,
**caractérisé en ce qu'**il est prévu une unité de détermination de vitesse d'écart (37) qui détermine la vitesse (36) d'un écart de la position latérale (18) du véhicule par rapport à une position latérale idéale (2) du véhicule, et **en ce qu'**il est prévu un circuit de régulation (16, 17) supplémentaire d'intégration au moyen duquel la vitesse (36) d'un écart de la position latérale (18) du véhicule par rapport à une position latérale idéale (2) du véhicule est prise en compte.

2. Système d'assistance au conducteur selon la revendication 1,
**caractérisé en ce que** pour réguler la position latérale (3) sur la position latérale idéale (2) du véhicule, et pour réguler la position angulaire (7) sur la position angulaire idéale (19) du véhicule, un angle de braquage de consigne (25, 26) est déterminé et est régulé par un régulateur d'angle de braquage associé.

3. Système d'assistance au conducteur selon l'une quelconque des revendications 1 ou 2,
**caractérisé en ce qu'**il est prédéfini une valeur de consigne (35) pour la vitesse d'un écart de la position latérale (18) du véhicule par rapport à une position latérale idéale (2) du véhicule.

4. Système d'assistance au conducteur selon la revendication 3,
**caractérisé en ce que** la valeur de consigne (35) pour la vitesse d'un écart de la position latérale (18) du véhicule par rapport à une position latérale idéale (2) du véhicule est prédéfinie en fonction d'un écart de la position latérale (18) du véhicule par rapport à la position latérale idéale (2) du véhicule.

5. Système d'assistance au conducteur selon l'une quelconque des revendications 1 à 4,
**caractérisé en ce que** le circuit de régulation interne (13) subordonné comporte une structure PD.

6. Système d'assistance à conducteur selon l'une quelconque des revendications 1 à 5,
**caractérisé en ce qu'**il est prévu en supplément une commande pilote de courbe (14, 15).

7. Système d'assistance au conducteur selon l'une quelconque des revendications 2 à 6,
**caractérisé en ce qu'**il est prévu un circuit de régulation externe (10, 11) sans composante intégrale, et **en ce qu'**il est pris en compte une réduction au moins partielle de l'écart de la position latérale (18) du véhicule par rapport à la position latérale idéale (2) du véhicule, par régulation de la position angulaire du véhicule au moyen du circuit de régulation interne (14, 15) lors de la détermination de l'angle de braquage de consigne (25, 26), afin d'éviter une augmentation plus grande et éventuellement trop forte de l'angle de braquage de consigne (25, 26).

8. Système d'assistance au conducteur selon l'une quelconque des revendications 2 à 7,
**caractérisé en ce qu'**il est prévu un circuit de régulation externe (10, 11) sans composante intégrale et **en ce qu'**un changement de direction relativement rapide est rendu possible par diminution rapide d'une composante intégrale existante.

9. Système d'assistance au conducteur selon l'une quelconque des revendications 1 à 6,
**caractérisé en ce que** le circuit de régulation externe comporte une structure PD ou une structure P²D.

10. Système d'assistance AU conducteur selon la revendication 9,
**caractérisé en ce que** le circuit de régulation externe comporte une structure P²D et **en ce que** lors d'un écart de la position latérale (18) du véhicule par rapport à la position latérale idéale (2) du véhicule il se produit une intervention suffisamment forte de la régulation par au moins deux amplifications (30, 31, 32 ; 50, 51).

11. Procédé d'assistance à un conducteur de véhicule lors de son activité de direction pour diriger un véhicule dans une voie de circulation, dans lequel une position latérale du véhicule est déterminée par rapport à une position latérale idéale du véhicule, et une position angulaire est déterminée par rapport à une position angulaire idéale du véhicule dans la voie de circulation, dans lequel avec un circuit de régulation externe (10, 11) la position latérale du véhicule est régulée et avec un circuit de régulation interne (13) subordonné la position angulaire du véhicule est régulée,
**caractérisé en ce qu'**une vitesse d'un écart de la position latérale (18) du véhicule par rapport à une position latérale idéale (2) du véhicule est déterminée, et **en ce que** la vitesse d'un écart de la position latérale (18) du véhicule par rapport à une position latérale idéale (2) du véhicule est prise en compte, au moyen d'un circuit de régulation (16, 17) supplémentaire d'intégration.

12. Procédé selon la revendication 11,
**caractérisé en ce que** pour la régulation de la position latérale (3) sur la position latérale idéale (2) du véhicule et pour la régulation de la position angulaire (7) sur la position angulaire idéale (19) du véhicule, un angle de braquage de consigne (25, 26) est déterminé et régulé.

13. Procédé selon l'une quelconque des revendications 11 ou 12,
**caractérisé en ce qu'**une valeur de consigne (35) pour la vitesse d'un écart de la position latérale (18) du véhicule par rapport à une position latérale idéale (2) du véhicule est prédéfinie en fonction d'un écart de la position latérale (18) du véhicule par rapport à la position latérale idéale (2) du véhicule.

14. Procédé selon l'une quelconque des revendications 11 à 13,
**caractérisé en ce qu'**une augmentation plus grande et éventuellement trop forte de l'angle de braquage de consigne (25, 26) est évitée et **en ce qu'**un changement de direction relativement rapide est rendu possible par diminution rapide d'une composante intégrale existante via un circuit de régulation externe (10, 11) sans composante intégrale, dans lequel une réduction au moins partielle de l'écart de la position latérale (18) du véhicule par rapport à la position latérale idéale (2) du véhicule est prise en compte par régulation de la position angulaire du véhicule lors de la détermination de l'angle de braquage de consigne (25, 26).

15. Procédé selon l'une quelconque des revendications 11 à 14,
**caractérisé en ce qu'**une augmentation permanente et éventuellement trop forte d'un angle de braquage de consigne (25, 26) à régler est évitée lors d'un écart de la position latérale (18) du véhicule par rapport à la position latérale idéale (2) du véhicule, **en ce qu'**il est prévu une régulation avec un circuit de régulation externe (10, 11) avec une structure P²D avec au moins deux amplifications (30, 31, 32 ; 50, 51).

16. Véhicule avec une direction de véhicule,
**caractérisé par** un système d'assistance au conducteur selon l'une des revendications 1 à 10. ,
